# EUROPÄISCHE PATENTSCHRIFT

(11) **EP 2 821 619 B1**
(45) Veröffentlichungstag und Bekanntmachung des Hinweises auf die Patenterteilung: **24.02.2016**
(21) Anmeldenummer: 14230008.6
(22) Anmeldetag: 27.06.2014
(51) Int. Cl.: F02B 75/04, F16C 7/06, F02D 15/02

(54) **Pleuel für eine zweistufige variable Verdichtung**
Connecting rod for a two-stage variable compression
Bielle pour un taux de compression variable en deux étapes

(30) Priorität: 05.07.2013 DE 102013107127
(43) Veröffentlichungstag der Anmeldung: 07.01.2015
(73) Patentinhaber: Hilite Germany GmbH, 97828 Marktheidenfeld (DE)
(72) Erfinder: Hutzelmann, Stefanie, 97782 Gräfendorf (DE); Müller, Falk, 97080 Würzburg (DE); Schulze, Dietmar, 35516 Münzenberg (DE); Balling, Manfred, 97072 Würzburg (DE); Matschiner, Tobias, 97828 Marktheidenfeld (DE); Scheibe, Christian, 68163 Mannheim (DE)
(74) Vertreter: Höer, Daniela

(56) Entgegenhaltungen:
- DE-A1-102005 055 199
- DE-A1-102010 061 360
- DE-A1-102010 061 362
- DE-A1-102012 014 917

## Beschreibung

### Stand der Technik

Die Erfindung betrifft gemäß dem einteilig gefassten Patentanspruch 1 ein Pleuel für eine zweistufige variable Verdichtung eines Verbrennungsmotors.

Aus der MTZ 05/2012, Seiten 388 bis 392, ist bereits ein Pleuel für eine zweistufige variable Verdichtung bekannt. In Übereinstimmung mit der Erfindung ist ein Kolbenbolzenlagerauge als Exzenter ausgeführt. Dieser Exzenter ist mittels einer ersten hydraulischen Verdrängerkammer in eine erste Drehrichtung schwenkbar und mittels einer zweiten hydraulischen Verdrängerkammer in eine zweite Drehrichtung schwenkbar. Dazu ist im Pleuel ein Hydraulikventil angeordnet. Das Hydraulikventil ist als 3/2-Wege-Ventil ausgeführt.

Aus der DE10 2010 061 360 A1 ist ein Pleuel mit einem Umschaltventil bekannt, dessen Steuerkolben mittels eines Betätigungsdrucks eines hydraulischen Fluids betätigbar ist.

Die DE 10 2012 014 917 A1 beschreibt ein Pleuel mit einem Umschaltventil, welches als 3/2-Wege-Ventil vorgesehen ist und dessen Schaltelement mittels eines Ansteuermechanismus mechanisch oder hydraulisch betätigbar ist.

### Offenbarung der Erfindung

Aufgabe der Erfindung ist es, ein Pleuel für eine zweistufige variable Verdichtung eines Verbrennungsmotors zu schaffen, das sich kostengünstig, zuverlässig und langlebig zwischen den beiden variablen Verdichtungsstufen verstellen lässt.

Diese Aufgabe wird erfindungsgemäß mit den Merkmalen von Patentanspruch 1 gelöst.

Erfindungsgemäß ist im Pleuel ein Hydraulikventil vorgesehen, welches einen hydraulischen Versorgungsanschluss aufweist. An diesem Versorgungsanschluss liegt ein hydraulischer Druck an, der insbesondere direkt oder indirekt von einer Ölpumpe kommen kann. Dieser hydraulische Druck kann einen Hydraulikkolben des Hydraulikventils gegen die Kraft einer vorgespannten Feder verschieben. Der Hydraulikkolben verbleibt in einem niedrigen Druckbereich des Versorgungsanschlusses infolge der Vorspannung der Feder unverändert in einer stabilen Niederdrucklage.

In dieser stabilen Niederdrucklage ist der Versorgungsanschluss hydraulisch mit der ersten Verdrängerkammer verbunden. Damit entleert sich die erste Verdrängerkammer stoßweise immer dann zum Versorgungsanschluss hin, wenn deren Verdrängerkammerdruck bedingt durch Gas- oder Massenkräfte am Pleuel bzw. Exzenter größer ist als der Druck am Versorgungsanschluss.

Der Hydraulikkolben weist zumindest eine Kolbenfläche auf. Liegt an dieser Kolbenfläche ein vom Versorgungsanschluss kommender Druck an, der in einem hohen Druckbereich liegt, so kommt der Hydraulikkolben zum Anliegen an einem Anschlag. In dieser stabilen Hochdrucklage ist der Versorgungsanschluss mit der zweiten Verdrängerkammer verbunden. Damit entleert sich die zweite Verdrängerkammer stoßweise immer dann zum Versorgungsanschluss hin, wenn deren Verdrängerkammerdruck bedingt durch Gas- oder Massenkräfte am Pleuel bzw. am Exzenter größer ist als der Druck am Versorgungsanschluss.

Ein instabiler Umschlagbereich ist zwischen dem niedrigen Druckbereich und dem hohen Druckbereich vorgesehen, bei dem die Verschiebung des Hydraulikkolbens von der stabilen Niederdrucklage zur stabilen Hochdrucklage bei einem höheren Druck erfolgt, als die Verschiebung von der stabilen Hochdrucklage zur stabilen Niederdrucklage.

Vorzugsweise werden beim Verstellen also nicht die Verdrängerkammer über den relativ schwachen Druck des Versorgungsanschlusses befüllt. Stattdessen werden die Verdrängerkammern über die hohen Kräfte am Pleuel gegen den relativ niedrigen Druck am Versorgungsanschluss entleert. Je nach Auslegung des Verbrennungsmotors und der Ölpumpe ist es in einer alternativen Ausgestaltung der Erfindung jedoch auch möglich, die eine Verdrängerkammer mit dem Druck von der Ölpumpe zu füllen und die anderen Verdrängerkammer zu einem Tankanschluss hin gegen den atmosphärischen Druck im Kurbelraum zu entleeren. Das Öl wird hierbei radial nach innen in das Hydraulikventil geleitet und anschließend axial ausgeleitet.

### Zeichnungen

Weitere Vorteile der Erfindung gehen aus den weiteren Patentansprüchen, der Beschreibung und der Zeichnung hervor.

Die Erfindung ist nachfolgend anhand eines Ausführungsbeispiels näher erläutert.

**Es zeigen beispielhaft:**
- Fig. 1: ein Pleuel eines Verbrennungsmotors, welches ein Hydraulikventil aufweist;
- Fig. 2: das Hydraulikventil aus Fig. 1 mit einem Hydraulikkolben in einer Niederdrucklage entsprechend dem Diagramm Fig. 3;
- Fig. 3: ein Diagramm, welches anhand eines Pfeils die Niederdrucklage des Hydraulikkolbens darstellt;
- Fig. 4: ein Diagramm, welches anhand des Pfeils die Niederdrucklage des Hydraulikkolbens - jedoch bei gegenüber Fig. 3 erhöhtem Druck - darstellt;
- Fig. 5: ein Diagramm, welches anhand des Pfeils die Niederdrucklage des Hydraulikkolbens - jedoch bei gegenüber Fig. 4 erhöhtem Druck - darstellt;
- Fig. 6: das Hydraulikventil aus Fig. 2 beim Umschalten des Hydraulikkolbens aus der Niederdrucklage;
- Fig. 7: ein Diagramm, welches anhand des Pfeils den Hydraulikkolben beim Umschalten entsprechend Fig. 6 darstellt;
- Fig. 8: das Hydraulikventil aus Fig. 2 mit dem Hydraulikkolben in einer Hochdrucklage entsprechend dem Diagramm in Fig. 9;
- Fig. 9: das zu Fig. 8 zugehörige Diagramm;
- Fig. 10: ein Diagramm, welches anhand des Pfeils die Hochdrucklage des Hydraulikkolbens - jedoch bei gegenüber Fig. 9 erhöhtem Druck - darstellt;
- Fig. 11: ein Diagramm, welches anhand des Pfeils die Hochdrucklage des Hydraulikkolbens - jedoch bei gegenüber Fig. 10 sinkendem Druck - darstellt;
- Fig. 12: ein Diagramm, welches anhand des Pfeils die Hochdrucklage des Hydraulikkolbens - jedoch bei gegenüber Fig. 11 gesunkenem Druck - darstellt;
- Fig. 13: ein Diagramm, welches anhand des Pfeils die Hochdrucklage des Hydraulikkolbens - jedoch bei gegenüber Fig. 12 weiter gesunkenem Druck - darstellt;
- Fig. 14: das Hydraulikventil aus Fig. 2 beim Umschalten des Hydraulikkolbens aus der Hochdrucklage;
- Fig. 15: ein Diagramm, welches anhand des Pfeils den Hydraulikkolben beim Umschalten entsprechend Fig. 14 darstellt;
- Fig. 16: ein Diagramm, welches anhand des Pfeils die Niederdrucklage des Hydraulikkolbens nach dem Umschaltvorgang darstellt; und
- Fig. 17: ein Diagramm, welches anhand des Pfeils die Niederdrucklage des Hydraulikkolbens - jedoch bei gegenüber Fig. 16 weiter gesunkenem Druck - darstellt.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

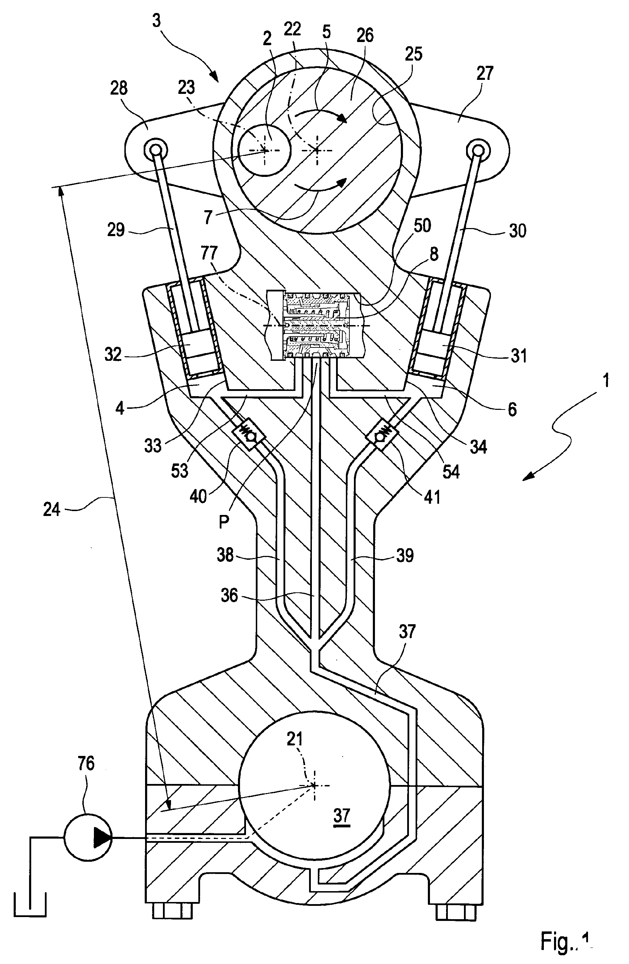

Fig. 1 zeigt ein Pleuel 1 eines Verbrennungsmotors. Das Pleuel 1 weist ein oberes Kolbenbolzenlagerauge 2 auf, in dem ein nicht näher dargestellter Kolbenbolzen eingesteckt ist. Dieser Kolbenbolzen ist in üblicher Weise fest in einen Brennraumkolben des Verbrennungsmotors eingesteckt. Das Kolbenbolzenlagerauge 2 ist mittels eines Exzenters 3 um eine Schwenkachse 22 schwenkbar, die parallel versetzt zur Längsachse 23 des Kolbenbolzenlagerauges 2 liegt. Somit ist es möglich, das Kolbenbolzenlagerauge 2 in seinem Abstand 24 zu einer Pleuellagerachse 21 eines Pleuellagers 35 zu verändern. Damit kann eine variable Verdichtung des Brennraums verwirklicht werden.

Der Exzenter 3 umfasst einen schwenkbar in einer Bohrung 25 des Pleuels 1 angeordneten Zapfen 26. Von diesem Zapfen 26 erstrecken sich zwei Arme 27, 28 diametral zueinander von dem Zapfen 26 hinfort. An den Enden dieser beiden Arme 27, 28 greifen Stützstangen 29, 30. Diese Stützstangen 29, 30 sind gelenkig mit zwei kleinen Linearkolben 31, 32 verbunden. Somit ist es möglich, den Zapfen 26 innerhalb der Bohrung 25 des Pleuels 1 zu schwenken.

Dabei fährt der eine kleine Linearkolben 31 bzw. 32 aus einer zylinderförmigen Bohrung 34 bzw. 33 innerhalb des Pleuels 1 aus, während der andere Linearkolben 32 bzw. 31 in eine zylinderförmige Bohrung 33 bzw. 34 des Pleuels 1 einfährt. Fährt der in der Zeichnung linke Linearkolben 32 ein, so wird der Zapfen 26 in der Drehrichtung 7 entgegen dem Uhrzeigersinn geschwenkt. Fährt hingegen der in der Zeichnung rechte Linearkolben 31 ein, so wird der Zapfen 26 in Drehrichtung 5 entsprechend dem Uhrzeigersinn geschwenkt. Die Drehung in Richtung des Uhrzeigersinns bewirkt eine Verlagerung des Kolbenbolzenlagerauges 2 weiter nach oben bzw. weiter von der Pleuellagerachse 21 hinfort. Damit wird der Abstand 24 vergrößert und somit wird die Verdichtung im Brennraum erhöht. Bei maximal eingefahrenem rechtem Linearkolben 31 ist der Brennraum auf die Stufe der maximalen Verdichtung eingestellt. Analog bewirkt ein Verschwenken des Zapfens 26 entgegen dem Uhrzeigersinn - d.h. in Drehrichtung 7 - eine Verringerung der Verdichtung bis hin zur Stufe der minimalen Verdichtung.

Um diese beiden Stufen der Verdichtung zu steuern, ist ein Hydraulikventil 8 mit einer Ventillängsachse 77 vorgesehen. Mit diesem Hydraulikventil 8 kann unter Druck stehendes Öl aus einer Verdrängerkammer 4 bzw. 6 zu einem Versorgungsanschluss P des Hydraulikventils 8 geführt werden. Vom Versorgungsanschluss P wird das Öl über einen Kanal 36, 37 zum Pleuellager 35 geführt, wo es in eine nicht näher dargestellte Ölversorgung eines Exzenterzapfens der Kurbelwelle eingeführt wird. Dieser Exzenterzapfen ist in üblicher Weise drehbar innerhalb des Pleuellagers 35 angeordnet. Beispielsweise bei einem 4-Zylinder- Motor sind vier solcher Exzenterzapfen an der Kurbelwelle angeordnet. Demzufolge sind bei einem solchen 4-Zylinder-Motor auch vier Pleuel 1 mit insgesamt vier Pleuellagern 35 vorgesehen.

Die Ölversorgung innerhalb des Pleuellagers 35 kommt von der Ölpumpe 76 des Verbrennungsmotors und versorgt über Zufuhrleitungen 38, 39 die beiden Verdrängerkammern 4, 6. Dabei ist in die beiden Zuführleitungen 38, 39 jeweils ein Rückschlagventil 40 bzw. 41 eingesetzt, welches in Flussrichtung von der jeweiligen Verdrängerkammer 4 bzw. 6 zu der Ölversorgung schließt und in die entgegengesetzte Flussrichtung öffnet.

Die vom Brennraumkolben über das Kolbenbolzenlagerauge 2 auf die Stützstangen 29, 30 übertragenen Kräfte sind sehr hoch. Diese hohen Kräfte sind um ein weites größer als die Kräfte, die am Linearkolben 31 bzw. 32 infolge des Druckes der Ölpumpe 76 wirken.

Damit kann das Hydraulikventil 8 je nach Stellung Druck aus der einen Verdrängerkammer 6 oder der anderen Verdrängerkammer 4 zur Ölversorgung zurück drücken. Wird die eine Verdrängerkammer 6 bzw. 4 infolge der hohen Kräfte des Brennraumkolbens verkleinert, so saugt die andere Verdrängerkammer 4 bzw. 6 über deren sich dann öffnendes Rückschlagventil 40 bzw. 41 Öl von der Ölversorgung ein. Auf dem Weg von der Ölpumpe 76 zur Ölversorgung innerhalb der Kurbelwelle sind weitere Verbraucher angeschlossen, die Öl abzweigen. Insbesondere geschmierte Lager senken den Öldruck ab. Die Viskosität des Öls spielt auch eine Rolle für den Öldruck.

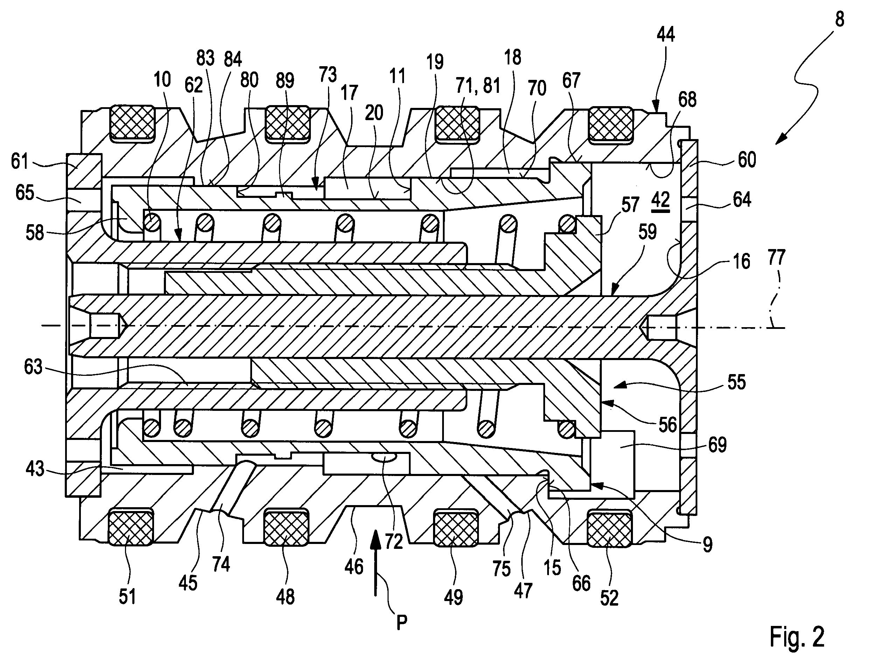

Das Hydraulikventil 8 und dessen Funktion wird im Folgenden anhand der Fig. 2 bis Fig. 17 näher erläutert.

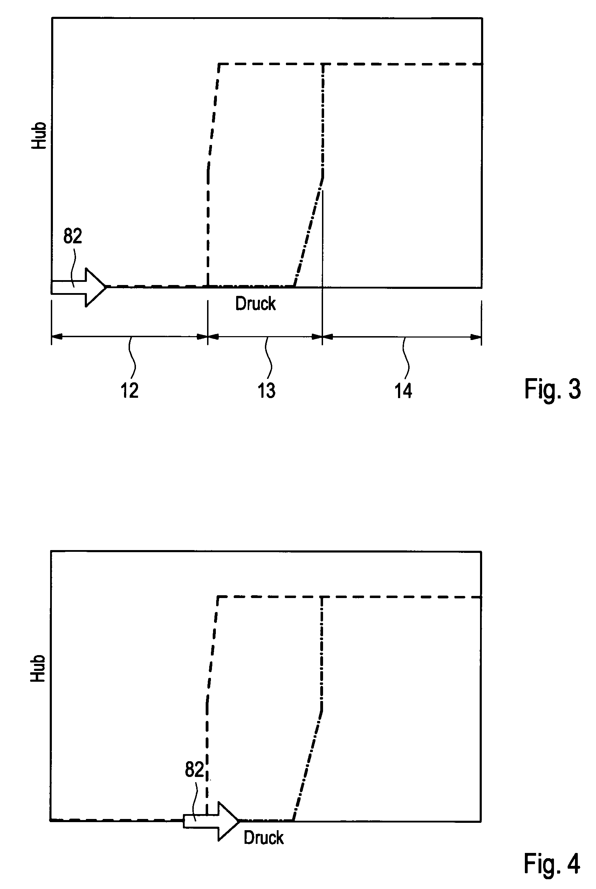

Fig. 2 zeigt das Hydraulikventil 8 entsprechend dem Diagramm Fig. 3 in einem Zustand, in welchem ein niedriger Druck am Versorgungsanschluss P anliegt. Das Hydraulikventil 8 weist ein buchsenförmiges Gehäuse 44 auf. Dieses Gehäuse 44 weist außen drei axial beabstandet zueinander angeordnete Ringnuten 45, 46, 47 auf. Diese Ringnuten 45, 46, 47 sind voneinander mittels Dichtringen 48, 49 hydraulisch getrennt. Das Hydraulikventil 8 ist in einer Bohrung 50 im Pleuel 1 eingesetzt. Um einen Druckverlust bzw. Leckagen der beiden äußeren Ringnuten 45, 47 zu verhindern, sind weitere Dichtringe 51, 52 vorgesehen. Die beiden äußeren Ringnuten 45, 47 führen jeweils über einen Kanal 53, 54 zur zugehörigen Verdrängerkammer 4 bzw. 6. Innerhalb des Gehäuses 44 ist ein Hydraulikkolben 9 axial verschiebbar geführt. Der Hydraulikkolben 9 ist hohl ausgeführt und stützt sich federelastisch über eine vorgespannte Schraubendruckfeder 10 und einen Federhalter 55 indirekt am Gehäuse 44 ab. Der Federhalter 55 ist dreiteilig. Der Federhalter 55 weist eine Abstützhülse 56 mit einem innerhalb des Gehäuses 44 angeordneten Kopf 57 auf. Die Schraubendruckfeder 10 ist einerseits an einem radial nach innen ragenden Absatz 58 des Hydraulikkolbens 9 axial abgestützt. An deren anderem Ende ist die Schraubendruckfeder 10 an dem Kopf 57 der Abstützhülse 56 abgestützt. Diese Abstützhülse 56 ist bewegungsfest auf einen Zentraldorn 59 gepresst, welcher ebenfalls einen tellerförmigen Kopf 60 aufweist. Dieser tellerförmige Kopf 60 ist an der einen Seite des Gehäuses 44 abgestützt. An der anderen Seite des Gehäuses 44 ist ein ebenfalls tellerförmiger Kopf 61 eines Schraubteils 62 des Federhalters 55 abgestützt. Dazu weist dieses Schraubteil 62 ein Innengewinde 63 auf. Mit diesem Innengewinde 63 ist das Schraubteil 62 auf die Abstützhülse 56 aufgeschraubt, die dazu ein korrespondierendes Außengewinde aufweist. Somit sind das Schraubteil 62 und der Zentraldorn 59 über die Abstützhülse 56 gegen das Gehäuse 44 verspannt.

Das Gehäuse 44 ist demzufolge zwischen den beiden tellerförmigen Köpfen 60, 61 verspannt. Der tellerförmige Kopf 60 des Zentraldorns 59 ist dazu relativ dünn, so dass dieser axial bezüglich einer Zentralachse des Hydraulikventils 8 elastisch verformbar ist und als Tellerfeder wirkt. Die beiden tellerförmigen Köpfe 60, 61 weisen Ausnehmungen 64, 65 auf, sodass in den von den tellerförmigen Köpfen 60, 61 begrenzten Räumen 42, 43 innerhalb des Gehäuses 44 kein Hydraulikfluid eingesperrt werden kann. Das stellt die freie axiale Beweglichkeit des Hydraulikkolbens 9 sicher. D.h., innerhalb des hohlen Hydraulikkolbens 9 ist das Öl frei verschieblich, einführbar und abführbar. Ein den Hydraulikkolben 9 beeinflussender Druck kann sich also innerhalb des Hydraulikkolbens 9 nicht aufbauen.

Die Schraubendruckfeder 10 ist radial innerhalb des Hydraulikkolbens 9 und radial außerhalb des Zentraldorns 59 und des Schraubteils 62 angeordnet.

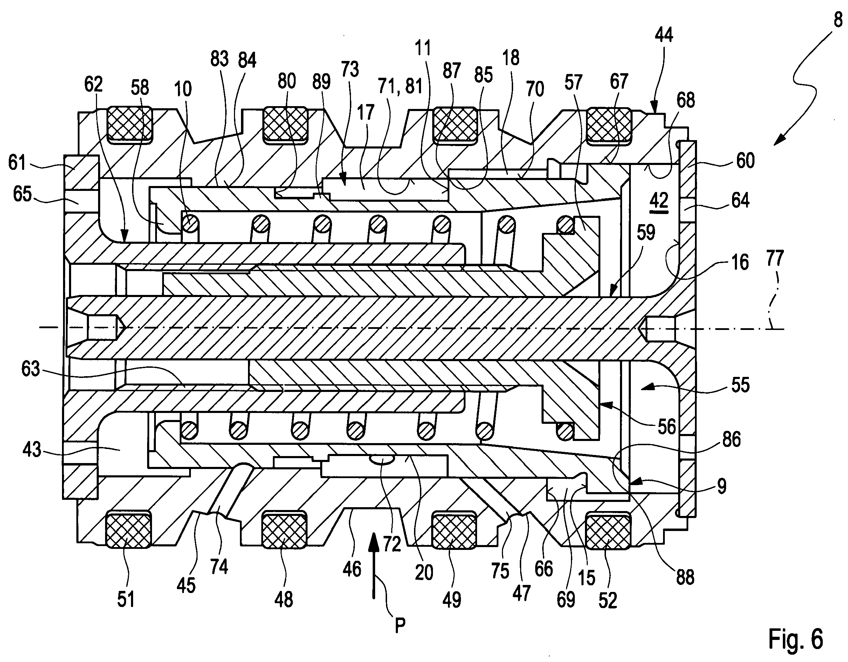

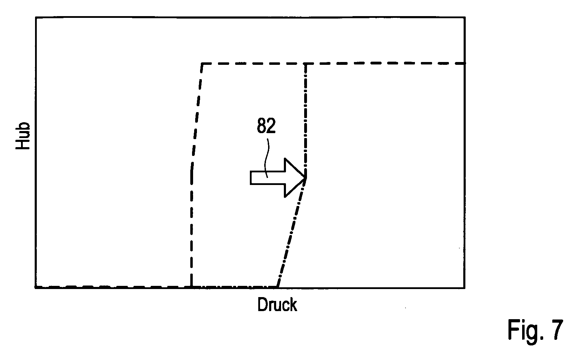

In der in Fig. 1 dargestellten Ausgangslage liegt eine radial äußere Kolbenfläche 15 des Hydraulikkolbens 9 an einem Absatz 66 des Gehäuses 44 an. Dieser radial äußeren Kolbenfläche 15 schließt sich in die auf den als Tellerfeder ausgebildeten Kopf 60 weisende Richtung eine Führungsmantelfläche 67 des Hydraulikkolbens 9 an. Die korrespondierende Bohrung 68 innerhalb des Gehäuses 44 weist einen sich umfangsmäßig und axial nur über einen Teilbereich der Bohrung 68 erstreckende Ausfräsungen 69 auf. Die Funktion dieser Ausfräsung 69 wird weiter unten zu Fig. 6 und Fig. 7 näher erläutert.

In der auf den anderen tellerförmigen Kopf 61 weisenden Richtung schließt sich der radial äußeren Kolbenfläche 15 eine weitere Führungsmantelfläche 70 an. Dabei ist der Übergang von der radial äußeren Kolbenfläche 15 zu der weiteren Führungsmantelfläche 70 mittels eines Freistichs ausgeführt. Die Führungsmantelfläche 70 des Hydraulikkolbens 9 ist innerhalb einer Bohrung 71 des Gehäuses 44 verschiebbar geführt. Dieser Führungsmantelfläche 70 schließt sich eine radial innere Kolbenfläche 11 an. Diese radial innere Kolbenfläche 11 begrenzt einen ersten Druckraum 17. Im Gegensatz dazu begrenzt die radial äußere Kolbenfläche 15 einen zweiten Druckraum 18.

Die beiden Druckräume 17, 18 sind somit hydraulisch mittels eines Dichtspalts 19 voneinander getrennt. Dieser Dichtspalt 19 bildet sich zwischen der Führungsmantelfläche 70 und einer Bohrungsinnenwand 81 der Bohrung 71.

In den ersten Druckraum 17 führt eine Querbohrung 72, welche zum Versorgungsanschluss P des Hydraulikventils 8 führt. Diese Querbohrung 72 führt zu einer Außenringnut 73 des Hydraulikventils 8, welche axial so bereit ist, dass sie in jeder Stellung des Hydraulikkolbens 9 einen Zufluss und Abfluss von Öl sicherstellt. In der hier dargestellten Stellung des Hydraulikkolbens 9 ist eine erste Bohrung 74 im Gehäuse 44 vom Hydraulikkolben 9 unverdeckt, welche somit den Versorgungsanschluss P über den Kanal 53 mit der Verdrängerkammer 4 verbindet. In analoger Weise führt eine zweite Bohrung 75 aus dem Innenraum des Gehäuses 44 über den Kanal 54 zur Verdrängerkammer 6. Diese zweite Bohrung 75 wird in dem in Fig. 2 dargestellten Zustand des Hydraulikventils 8 von der radial äußeren Führungsmantelfläche 70 des Hydraulikkolbens 9 verdeckt.

Mit Bezug auf Fig. 1 und Fig. 2 wird aus der Verdrängerkammer 4 über den Kanal 53 Hydraulikfluid in die erste Bohrung 74 geleitet und entlang der Außenringnut 73 durch die Bohrung 72 zum Versorgungsanschluss P geführt. Vom Versorgungsanschluss P fließt das Hydraulikfluid über die Kanäle 36, 37 zum Pleuellager 35. Da jedoch die andere Verdrängerkammer 6 über die verdeckte zweite Bohrung 75 kein Hydraulikfluid nachsaugen kann, saugt sie gleichzeitig über das Rückschlagventil 41 den wesentlichen Teil des Öls ein, welches aus der anderen Verdrängerkammer 4 herausgedrückt wird. Dabei saugt die Verdrängerkammer 6 über die Zufuhrleitung 39, welche in die Kanäle 37, 38 mündet und damit sowohl mit der Ölversorgung als auch dem Versorgungsanschluss P in Verbindung steht. Befindet sich der Verbrennerkolben in der unteren Stellung bei minimaler Verdichtung, so führen normale Druckschwankungen im Hydrauliksystem nicht zu einer Veränderung der Stellung des Hydraulikkolbens 9. Der Hydraulikkolben 9 führt gemäß Fig. 3 auch bei leicht steigendem Druck keinen Hub aus.

Fig. 4 zeigt, dass auch bei weiter am Versorgungsanschluss P ansteigenden Druck kein Hub des Hydraulikkolbens 9 erfolgt, sodass sich dieser noch in dem in Fig. 2 dargestellten Zustand befindet. Bei sämtlichen Diagrammen ist der Hub über dem Druck aufgetragen. Der Hub ist bei ansteigendem Druck mittels einer punktierten Linie dargestellt. Der Hub bei sinkendem Druck ist mittels einer gestrichelten Linie dargestellt.

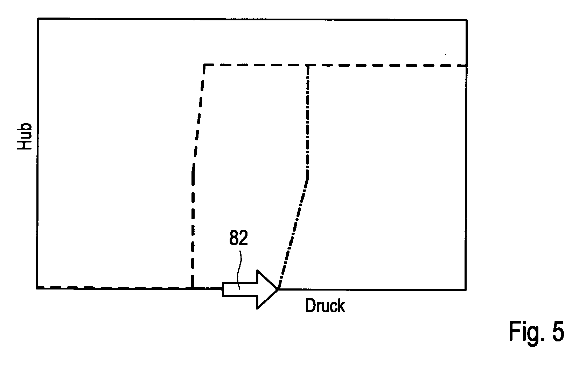

Fig. 5 zeigt einen Anstieg des Druckes in der ersten Hydraulikkammer 17 bis auf einen Wert, der kurz davor liegt, die Vorspannung der Schraubendruckfeder 10 zu überwinden.

Anhand eines auch in Fig. 3 und Fig. 4 verwendeten Pfeils 82 ist der - jedoch gegenüber Fig. 3 und Fig. 4 erhöhte - Druck ersichtlich, bei dem sich der Hydraulikkolben 9 in der Niederdrucklage befindet.

Fig. 6 zeigt das Hydraulikventil 8 aus Fig. 2 beim Umschalten des Hydraulikkolbens 9 aus der Niederdrucklage. Der Druck in der ersten Druckkammer 17 ist so weit angestiegen, dass die Vorspannung der Schraubendruckfeder 10 überwunden ist. Gemäß dem Diagramm Fig. 7 bewirkt der vom Versorgungsanschluss P kommende erhöhte Druck eine Kraft, die den Hydraulikkolben 9 gegen die linear ansteigende Kraft der Schraubendruckfeder 10 in Richtung auf den Anschlag 16 verschiebt. Diese Kraft bildet sich dabei aus einer Kraftdifferenz zwischen der an der radial inneren Kolbenfläche 11 angreifenden Kraft und einer Kraft, welche an einer gegenüberliegenden dritten Kolbenfläche 80 angreift. Diese dritte Kolbenfläche 80 ist kleiner als die radial innere Kolbenfläche 11 und begrenzt ebenfalls die Druckkammer 17. Ähnlich dem Dichtspalt 19 wird auch die dritte Kolbenfläche 80 radial außen durch einen Dichtspalt 83 begrenzt. Die diesem Dichtspalt 83 zugehörige Führungsmantelfläche 84 des Hydraulikkolbens 9 verschließt die erste Bohrung 74, sodass auch der Fluss von der Verdrängerkammer 4 zum Versorgungsanschluss P abgesperrt ist. Die zweite Bohrung 75 ist in der in Fig. 6 und Fig. 7 dargestellten Position des Hydraulikkolbens 9 auch noch gesperrt, sodass der Versorgungsdruck P den Hydraulikkolben 9 verschieben kann, ohne dass fluidischer Austausch von und zu den Verdrängerkammern 4 und 6 Einfluss auf die Verschiebung nehmen kann.

In Fig. 6 ist ersichtlich, dass der zweite Druckraum 18 nicht gänzlich rotationssymmetrisch umlaufend ist. Stattdessen mündet die zweite Bohrung 75 in die Bohrung 71 ein, wobei diese Bohrung 71 durch den Hydraulikkolben 9 gesperrt ist. Dieser Bohrung 71 schließt sich nach dem Absatz 56 des Gehäuses 44 die Ausfräsung 69 an. Damit vergrößert die Ausfräsung 69 den zweiten Druckraum 18. Der Druckraum 18 wird in der dargestellten Position des Hydraulikkolbens 9 - einerseits von ersten Steuerkante 85 an der Innenwand des Gehäuses 44 und - andererseits von einer zweiten Steuerkante 86 begrenzt. Dazu schließen diese beiden Steuerkanten 85, 86 mit zwei Kolbenkanten 87, 88 des Hydraulikkolbens 9 in dessen dargestellter Position bündig ab.

Sowohl
- an dem Durchgang der Paarung Steuerkante 85/Kolbenkante 87 als auch
- an dem Durchgang der Paarung Steuerkante 86/Kolbenkante 88 treten naturgemäß relativ große Leckagen auf.

Ab diesem im Diagramm in Fig. 7 dargestellten Druck bewegt sich der Hydraulikkolben 9 schlagartig auf den Anschlag 16 zu, wohingegen der Druck konstant bleibt. Dies ist in Fig. 7 anhand der nach einem Knick senkrecht nach oben verlaufenden punktierten Linie dargestellt.

In Fig. 6 ist überdies ersichtlich, dass ein sich radial vom Nutgrund 20 der Außenringnut 73 nach außen erstreckender Ringsteg 89 als Drossel zwischen der ersten Bohrung 74 und dem Versorgungsanschluss P ausgeführt ist, die ihre drosselnde Funktion mit der Abdeckung der ersten Bohrung 74 verliert.

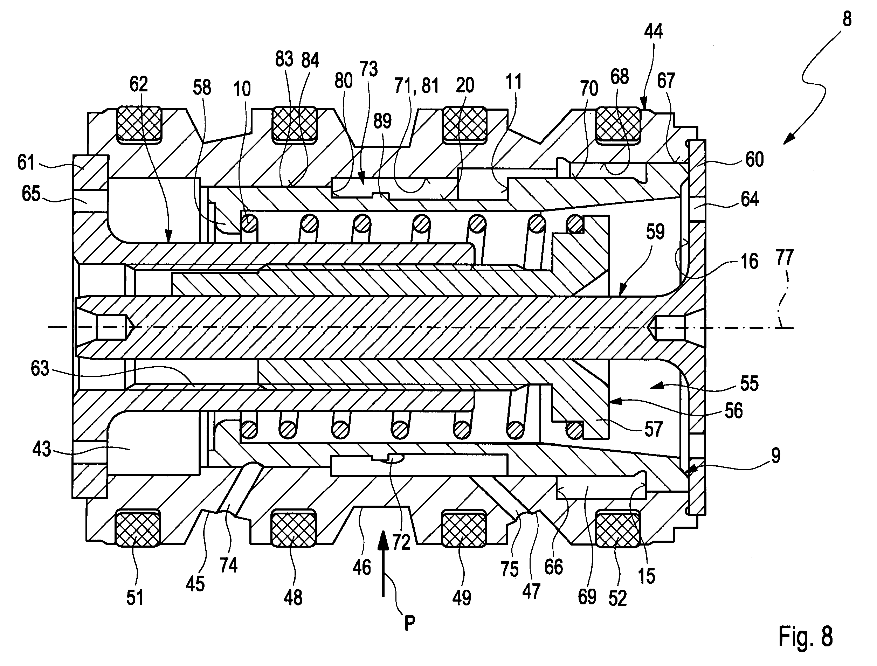

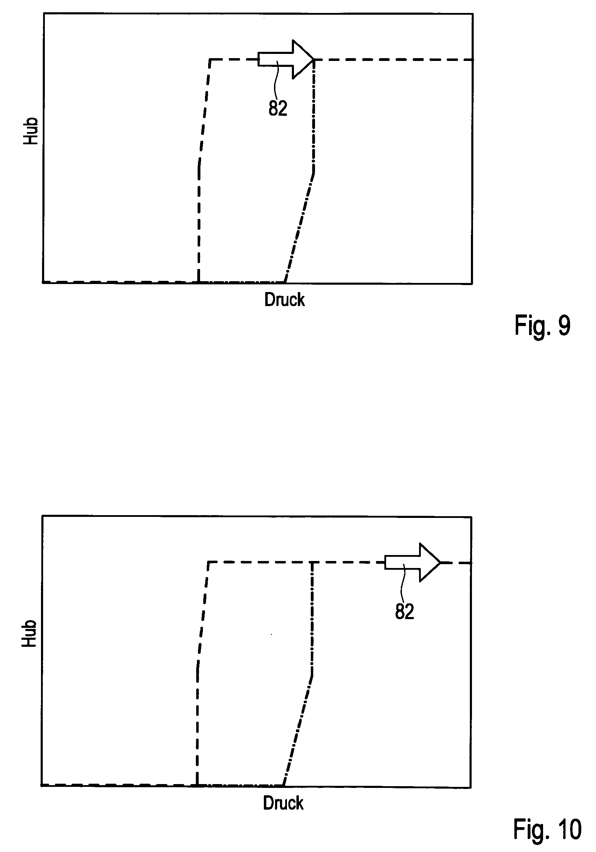

Fig. 8 zeigt das Hydraulikventil aus Fig. 2 mit dem Hydraulikkolben 9 in einer Hochdrucklage entsprechend dem Diagramm in Fig. 9. Dabei wirkt der vom Versorgungsanschluss P und/oder der zweiten Bohrung 75 kommende Druck auf die beiden Kolbenflächen 11, 15. Die sich als Summe daraus ergebende Kraft ist erheblich größer, als die entgegengerichtet wirkende Kraft, die sich aus dem Druck an der Kolbenfläche 80 ergibt. Der Hydraulikkolben 9 liegt damit am Anschlag 16 an und kann nicht weiter verschoben werden. Dies stellt sich im Diagramm in Fig. 9 dar, demgemäß der Hub bei weiter steigendem Druck nicht weiter ansteigen kann.

Fig. 10 zeigt dazu ein Diagramm, welches anhand des Pfeils 82 die Hochdrucklage des Hydraulikkolbens 9 - jedoch bei gegenüber Fig. 9 noch weiter erhöhtem Druck - darstellt.

Im Folgenden wird das Verhalten des Hydraulikventils 8 bei fallendem Druck am Versorgungsanschluss P dargestellt.

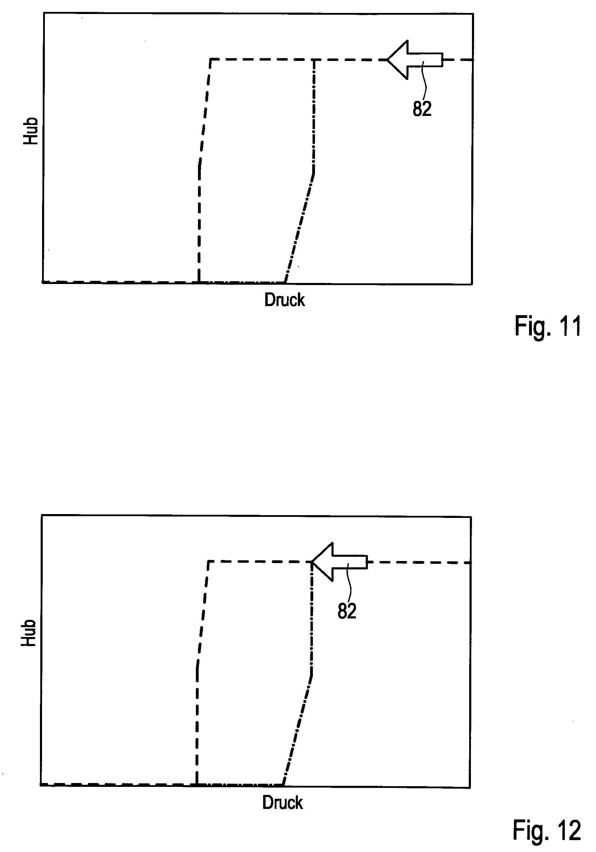

Fig. 11 zeigt dazu ein Diagramm, welches anhand des Pfeils 82 die Hochdrucklage des Hydraulikkolbens 9 darstellt.

Gemäß dem Diagramm in Fig. 12 fällt der Druck weiter. Anhand des Pfeils 82 ist ersichtlich, dass sich der Hydraulikkolben 9 noch in der Hochdrucklage befindet.

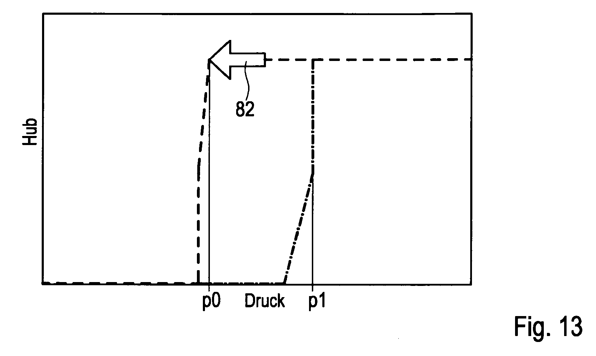

Fig. 13 zeigt ein Diagramm, welches anhand des Pfeils 82 die Hochdrucklage des Hydraulikkolbens - jedoch bei gegenüber Fig. 12 weiter gesunkenem Druck - darstellt.

Dabei ist ersichtlich, dass der Hydraulikkolben 9 weiterhin an dem Anschlag 16 anliegt, obwohl der Druck p0 am Versorgungsanschluss P unter den Druck p1 gefallen ist, bei welchem der Hydraulikkolben 9 bei steigendem Druck zur Anlage an den Anschlag 16 kam.

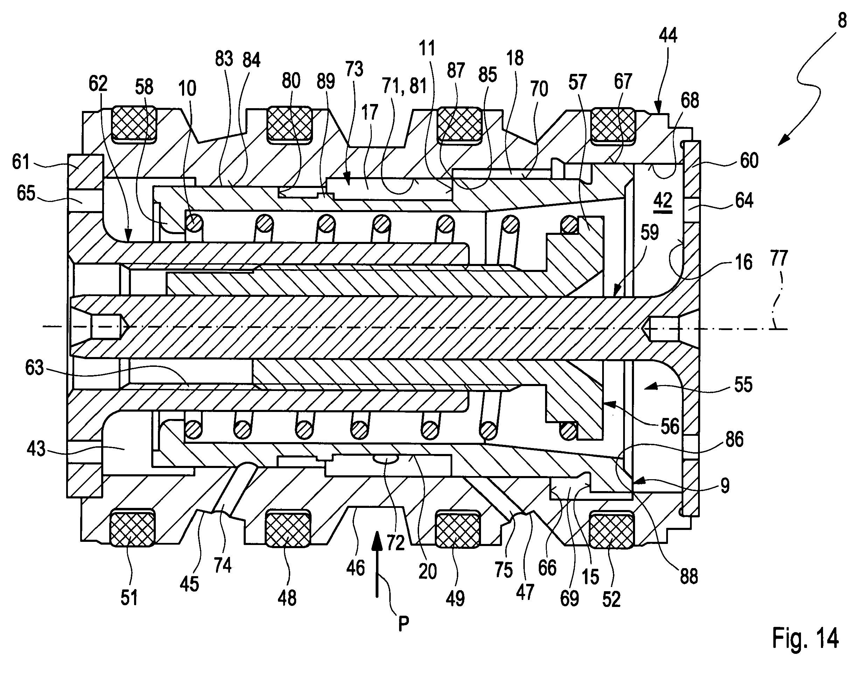

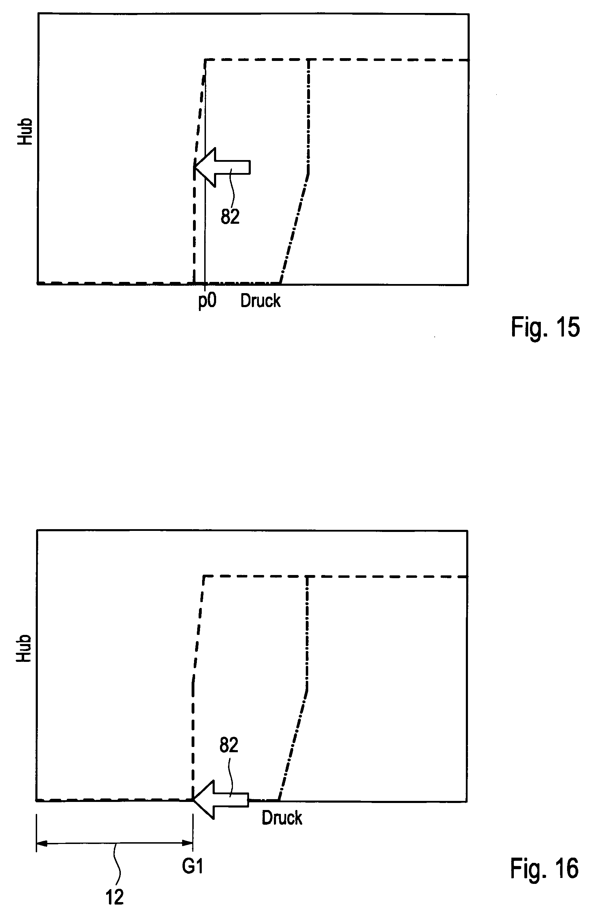

Gemäß dem Diagramm in Fig. 15, welches anhand des Pfeils 82 den Hydraulikkolben 9 beim Umschalten entsprechend Fig. 14 darstellt, fällt der Hub über dem Druck linear ab. Dieser Abfall beginnt aus der Hochdrucklage. Die Linearität ergibt sich aus dem linearen Verhalten der Schraubendruckfeder 10.

Der lineare Abfall erfolgt, bis der Hydraulikkolben 9 eine Position entsprechend Fig. 14 eingenommen hat. Diese Position entsprechend Fig. 14 ist identisch der Position entsprechend Fig. 6. Dabei schließen die beiden Steuerkanten 85, 86 wieder mit den beiden Kolbenkanten 87, 88 des Hydraulikkolbens 9 in dessen dargestellter Position bündig ab.

Fig. 16 zeigt ein Diagramm, welches anhand des Pfeils 82 die Niederdrucklage des Hydraulikkolbens 9 nach dem Umschaltvorgang darstellt. Der Druck liegt dabei an einem oberen Grenzwert G1 des niedrigen Druckbereichs 12. Der Hydraulikkolben 9 befindet sich wieder in der in Fig. 2 dargestellten Position, in welcher der Hydraulikkolben 9 mit der radial äußeren Kolbenfläche 15 an der Stirnfläche 80 zur Anlage kommt.

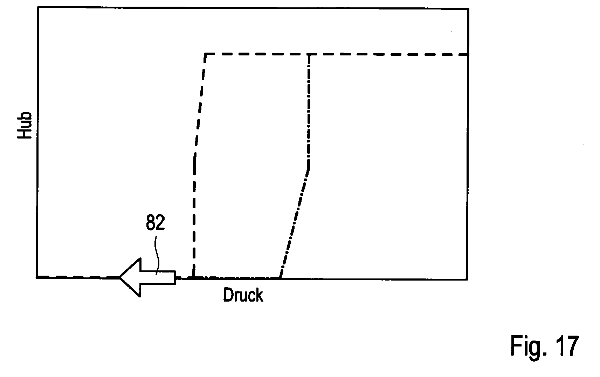

Fig. 17 zeigt ein Diagramm, welches anhand des Pfeils 82 die Niederdrucklage des Hydraulikkolbens 9 - jedoch bei gegenüber Fig. 16 weiter gesunkenem Druck - darstellt.

Die weiter oben erwähnte Ausfräsung 69 aus dem Gehäuse 44 hat folgende Funktion:
Bewegt sich der Hydraulikkolben 9 aus der Position gemäß Fig. 2 in die Position gemäß Fig. 6, so nimmt das Volumen in dem zweiten Druckraum 18 zu. Um das zusätzlich benötigte Volumen mit Luft/Ölnebel/Öl-Gemisch zu befüllen, wird Öl durch die Ausnehmungen 64 nachgesaugt. Das Luft/Ölnebel/Öl-Gemisch strömt dabei durch den sich beim Hub der Hydraulikkolbens 9 verringernden Spalt zwischen der Kolbenkante 88 und der zweiten Steuerkante 86 und den sich vergrößernden Spalt zwischen dem Absatz 66 und der radial äußeren Kolbenfläche 15.

Sobald die Position gemäß Fig. 6 erreicht ist, wird das Luft/Ölnebel/Ol-Gemisch durch nachdrückendes Öl aus dem ersten Druckraum 17 ersetzt.

Für den umgekehrten Weg des Hydraulikkolbens 9 gilt Analoges: Bewegt sich der Hydraulikkolben 9 aus der Position gemäß Fig. 14 in die Position gemäß Fig. 2, so nimmt das Volumen in dem zweiten Druckraum 18 ab. Um das verdrängte Volumen von dem Öl zu befreien, wird das Öl durch die Ausnehmungen 64 ausgestoßen. Das Öl strömt dabei durch den sich beim Hub der Hydraulikkolbens 9 vergrößernden Spalt zwischen der Kolbenkante 88 und der zweiten Steuerkante 86 und den sich verkleinernden Spalt zwischen dem Absatz 66 und der radial äußeren Kolbenfläche 15.

Der Umschaltvorgang am Hydraulikventil wird insbesondere durch eine kurzzeitige Änderung des Öldruckes ausgelöst. Ein kurzzeitiger starker Anstieg des Öldruckes führt somit zur Erhöhung der Verdichtung. Ein kurzzeitiger starker Abfall des Öldruckes führt somit zur Verringerung der Verdichtung.

In einer alternativen Ausgestaltung der Erfindung ist es auch möglich, mittels einer variablen Ölpumpe das Hydraulikventil durch eine langfristige Änderung des Öldruckes zu schalten.

Anstelle einer Schraubendruckfeder mit linearer Kennlinie kann auch eine Schraubendruckfeder mit progressiver oder degressiver Kennlinie verwendet werden. Auch kann anstelle der Schraubendruckfeder ein Paket aus Tellerfedern Anwendung finden.

Anstelle Öls sind auch andere hydraulische Fluide möglich.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

### Bezugszeichenliste

- 1: Pleuel
- 2: Kolbenbolzenlagerauge
- 3: Exzenter
- 4: erste Verdrängerkammer
- 5: erste Drehrichtung
- 6: zweite Verdrängerkammer
- 7: zweite Drehrichtung
- 8: Hydraulikventil
- 9: Hydraulikkolben
- 10: Feder
- 11: radial innere Kolbenfläche
- 12: niedriger Druckbereich
- 13: instabiler Umschlagbereich
- 14: hoher Druckbereich
- 15: radial äußere Kolbenfläche
- 16: Anschlag
- 17: erster Druckraum
- 18: zweiter Druckraum
- 19: Dichtspalt
- 20: Nutgrund
- 21: Pleuellagerachse
- 22: Schwenkachse
- 23: Längsachse
- 24: Abstand
- 25: Bohrung
- 26: Zapfen
- 27: Arm
- 28: Arm
- 29: Stützstange
- 30: Stützstange
- 31: Linearkolben
- 32: Linearkolben
- 33: zylinderförmige Bohrung
- 34: zylinderförmige Bohrung
- 35: Pleuellager
- 36: Kanal
- 37: Kanal
- 38: Zufuhrleitung
- 39: Zufuhrleitung
- 40: Rückschlagventil
- 41: Rückschlagventil
- 42: Raum
- 43: Raum
- 44: buchsenförmiges Gehäuse
- 45: Ringnut
- 46: Ringnut
- 47: Ringnut
- 48: Dichtung
- 49: Dichtung
- 50: Bohrung im Pleuel
- 51: weiterer Dichtring
- 52: weiterer Dichtring
- 53: Kanal
- 54: Kanal
- 55: Federhalter
- 56: Abstützhülse
- 57: Kopf der Abstützhülse
- 58: Absatz des Hydraulikkolbens
- 59: Zentraldorn
- 60: tellerförmiger Kopf des Zentraldorns
- 61: tellerförmiger Kopf des Schraubteils
- 62: Schraubteil
- 63: Innengewinde
- 64: Ausnehmungen
- 65: Ausnehmungen
- 66: Absatz des Gehäuses
- 67: Führungsmantelfläche
- 68: Bohrung
- 69: Ausfräsung
- 70: Führungsmantelfläche
- 71: Bohrung
- 72: Querbohrung
- 73: Außenringnut
- 74: erste Bohrung
- 75: zweite Bohrung
- 76: Ölpumpe
- 77: Ventillängsachse
- 78: -
- 79: -
- 80: dritte Kolbenfläche
- 81: Bohrungsinnenwand
- 82: Pfeil
- 83: Dichtspalt
- 84: Führungsmantelfläche
- 85: erste Steuerkante
- 86: zweite Steuerkante
- 87: Kolbenkante
- 88: Kolben kante
- 89: Ringsteg

## Patentansprüche

1. Pleuel (1) für eine zweistufige variable Verdichtung eines Verbrennungsmotors, bei der ein Kolbenbolzenlagerauge (2) als Exzenter (3) ausgeführt ist, der mittels einer ersten hydraulischen Verdrängerkammer (4) in eine erste Drehrichtung (5) schwenkbar ist und mittels einer zweiten hydraulischen Verdrängerkammer (6) in eine zweite Drehrichtung (7) schwenkbar ist, wobei im Pleuel (1) ein Hydraulikventil (8) angeordnet ist, welches einen hydraulischen Versorgungsanschluss (P) aufweist, an dem ein hydraulischer Druck anliegt, welcher einen Hydraulikkolben (9) gegen die Kraft einer vorgespannten Feder (10) verschieben kann, wobei der Hydraulikkolben (9) in einem niedrigen Druckbereich (12) infolge der Vorspannung der Feder (10) unverändert in einer stabilen Niederdrucklage verbleibt, in welcher der Versorgungsanschluss (P) hydraulisch mit der ersten Verdrängerkammer (4) verbunden ist, wobei der Hydraulikkolben (9) in einem hohen Druckbereich (14) infolge des an einer Kolbenfläche (11, 15) anliegenden Druckes unverändert an einem Anschlag (16) anliegt, wobei in dieser stabilen Hochdrucklage der Versorgungsanschluss (P) mit der zweiten Verdrängerkammer (6) verbunden ist und wobei
ein instabiler Umschlagbereich (13) zwischen dem niedrigen Druckbereich (12) und dem hohen Druckbereich (14) vorgesehen ist, bei dem die Verschiebung des Hydraulikkolbens (9) von der stabilen Niederdrucklage zur stabilen Hochdrucklage bei einem höheren Druck erfolgt, als die Verschiebung von der stabilen Hochdrucklage zur stabilen Niederdrucklage.

2. Pleuel nach Patentanspruch 1, **dadurch gekennzeichnet, dass** sich die Kolbenfläche (11, 15) am Hydraulikkolben (9) auf zwei Kolbenflächen (11, 15) verteilt, von denen die radial innere Kolbenfläche (11) einen ersten Druckraum (17) begrenzt, wohingegen die radial äußere Kolbenfläche (15) einen zweiten Druckraum (18) begrenzt, wobei die beiden Druckräume (17, 18) durch einen zwischen diesen liegenden Dichtspalt (19) voneinander getrennt sind.

3. Pleuel nach Patentanspruch 2, **dadurch gekennzeichnet, dass** der Dichtspalt (19) zwischen einer Bohrungsinnenwand (81) eines Gehäuses (44) und einer Führungsmantelfläche (70) gebildet wird, welche bezüglich einer Ventillängsachse (77) axial zwischen der radial inneren Kolbenfläche (11) und der radial äußeren Kolbenfläche (15) angeordnet ist.

4. Pleuel nach einem der Patentansprüche 2 bis 3, **dadurch gekennzeichnet, dass** der zweite Druckraum (18) über eine vom ersten Druckraum (17) getrennte Passage (Ausfräsung 69) Hydraulikfluid nachsaugen kann, wenn sich der Hydraulikkolben (9) zwischen der Niederdrucklage und der Hochdrucklage befindet.

5. Pleuel nach Patentanspruch 4, **dadurch gekennzeichnet, dass** die Passage (Ausfräsung 69) abgesperrt ist und der erste Druckraum (17) und der zweite Druckraum (18) miteinander verbunden sind, wenn der Hydraulikkolben (9) in der Hochdrucklage zum Anliegen an einem Anschlag (16) des Gehäuses (44) kommt.

6. Pleuel nach einem der vorhergehenden Patentansprüche, **dadurch gekennzeichnet, dass** die beiden Verdrängerkammern (4, 6) über Rückschlagventile (40, 41) mit dem Versorgungsanschluss (P) derart verbunden sind, dass Hydraulikfluid vom Versorgungsanschluss (P) und/oder einem von einer Ölpumpe (76) kommenden Kanal (37) nachgesaugt werden kann.

7. Pleuel nach einem der vorhergehenden Patentansprüche, **dadurch gekennzeichnet, dass** der Hydraulikkolben (9) eine der Kolbenfläche (11, 15) gegenüber liegende flächenmäßig kleinere Kolbenfläche (80) aufweist.

8. Pleuel nach einem der vorhergehenden Patentansprüche, **dadurch gekennzeichnet, dass** der Hydraulikkolben (9) eine Position mit einem instabilen Umschlagbereich aufweist, bei dem zwischen einer Führungsmantelfläche (84) des Hydraulikkolbens (9) und einem Gehäuse (44) ein Dichtspalt (83) gebildet wird, welcher eine zur ersten hydraulischen Verdrängerkammer (4) führende erste Bohrung (74) verschließt, sodass der Fluss von der Verdrängerkammer (4) zum Versorgungsanschluss (P) abgesperrt ist, wobei eine zur anderen hydraulischen Verdrängerkammer (6) führende zweite Bohrung (75) ebenfalls gesperrt ist, so dass der Versorgungsdruck (P) den Hydraulikkolben (9) verschieben kann, ohne dass ein fluidischer Austausch von und zu den Verdrängerkammern (4, 6) Einfluss auf die Verschiebung nehmen kann.

9. Pleuel nach Patentanspruch 8, **dadurch gekennzeichnet, dass** ein sich radial von einem Nutgrund (20) der Außenringnut (73) nach außen erstreckender Ringsteg (89) als Drossel zwischen der ersten Bohrung (74) und dem Versorgungsanschluss (P) ausgeführt ist, die ihre drosselnde Funktion mit der Abdeckung der Bohrung (74) verliert.

## Claims

1. Connecting rod (1) for a two-stage variable compression of an internal combustion engine, in which a gudgeon pin bearing socket (2) is configured as an eccentric (3) which can be pivoted in a first rotational direction (5) by means of a first hydraulic displacement chamber (4) and can be pivoted in a second rotational direction (7) by means of a second hydraulic displacement chamber (6), a hydraulic valve (8) being arranged in the connecting rod (1), which hydraulic valve (8) has a hydraulic supply connector (P), at which a hydraulic pressure prevails which can displace a hydraulic piston (9) counter to the force of a prestressed spring (10), the hydraulic piston (9) remaining unchanged in a stable low pressure position in a low pressure region (12) as a consequence of the prestress of the spring (10), in which low pressure position the supply connector (P) is connected hydraulically to the first displacement chamber (4), the hydraulic piston (9) bearing in an unchanged manner against the stop (16) in a high pressure region (14) as a consequence of the pressure which prevails on a piston face (11, 15), the supply connector (P) being connected to the second displacement chamber (6) in this stable high pressure position, and an unstable switchover region (13) being provided between the low pressure region (12) and the high pressure region (14), in which unstable switchover region (13) the displacement of the hydraulic piston (9) from the stable low pressure position to the stable high pressure position takes place at a higher pressure than the displacement from the stable high pressure position to the stable low pressure position.

2. Connecting rod according to Patent Claim 1, **characterized in that** the piston face (11, 15) on the hydraulic piston (9) is distributed to two piston faces (11, 15), of which the radially inner piston face (11) delimits a first pressure space (17), whereas the radially outer piston face (15) delimits a second pressure space (18), the two pressure spaces (17, 18) being separated from one another by way of a sealing gap (19) which lies between them.

3. Connecting rod according to Patent Claim 2, **characterized in that** the sealing gap (19) is formed between a bore inner wall (81) of a housing (44) and a guide circumferential face (70) which is arranged axially with regard to a valve longitudinal axis (77) between the radially inner piston face (11) and the radially outer piston face (15).

4. Connecting rod according to either of Patent Claims 2 and 3, **characterized in that** the second pressure space (18) can suck in the hydraulic fluid via a passage (milled-out section 69) which is separated from the first pressure space (17) when the hydraulic piston (9) is situated between the low pressure position and the high pressure position.

5. Connecting rod according to Patent Claim 4, **characterized in that** the passage (milled-out section 69) is shut off and the first pressure space (17) and the second pressure space (18) are connected to one another when the hydraulic piston (9) in the high pressure position comes to bear against the stop (16) of the housing (44).

6. Connecting rod according to one of the preceding patent claims, **characterized in that** the two displacement chambers (4, 6) are connected to the supply connector (P) via check valves (40, 41) in such a way that hydraulic fluid can be sucked from the supply connector (P) and/or a duct (37) which comes from an oil pump (76).

7. Connecting rod according to one of the preceding patent claims, **characterized in that** the hydraulic piston (9) has a piston face (80) which is smaller in terms of area and lies opposite the piston face (11, 15) .

8. Connecting rod according to one of the preceding patent claims, **characterized in that** the hydraulic piston (9) has a position with an unstable switchover region, in which a sealing gap (83) is formed between a guide circumferential face (84) of the hydraulic piston (9) and a housing (44), which sealing gap (83) closes a first bore (74) which leads to the first hydraulic displacement chamber (4), with the result that the flow from the displacement chamber (4) to the supply connector (P) is shut off, a second bore (75) which leads to the other hydraulic displacement chamber (6) likewise being shut off, with the result that the supply pressure (P) can displace the hydraulic piston (9), without it being possible for a fluid exchange from and to the displacement chambers (4, 6) to have an influence on the displacement.

9. Connecting rod according to Patent Claim 8, **characterized in that** an annular web (89) which extends radially to the outside from the groove bottom (20) of the outer annular groove (73) is configured as a throttle between the first bore (74) and the supply connector (P), which throttle loses its throttling function as the bore (74) is covered.

## Revendications

1. Bielle (1) pour une compression variable à deux étages d'un moteur à combustion interne, dans laquelle un oeil de palier de boulon de piston (2) est réalisé sous forme d'excentrique (3) qui peut pivoter au moyen d'une première chambre de déplacement hydraulique (4) dans un premier sens de rotation (5) et qui peut pivoter, au moyen d'une deuxième chambre de déplacement hydraulique (6), dans un deuxième sens de rotation (7), une soupape hydraulique (8) étant disposée dans la bielle (1), laquelle présente un raccord d'alimentation hydraulique (P) au niveau duquel s'applique une pression hydraulique qui peut déplacer un piston hydraulique (9) à l'encontre de la force d'un ressort précontraint (10), le piston hydraulique (9), dans une plage de basse pression (12), restant de manière inchangée du fait de la précontrainte du ressort (10) dans une position de basse pression stable dans laquelle le raccord d'alimentation (P) est connecté hydrauliquement à la première chambre de déplacement (4), le piston hydraulique (9), dans une plage de haute pression (14), s'appliquant contre une butée (16) de manière inchangée, du fait de la pression s'appliquant contre une surface de piston (11, 15), le raccord d'alimentation (P), dans cette position de haute pression stable, étant connecté à la deuxième chambre de déplacement (6) et une plage de transition instable (13) entre la plage de basse pression (12) et la plage de haute pression (14) étant prévue, dans laquelle le déplacement du piston hydraulique (9) de la position de basse pression stable à la position de haute pression stable a lieu à une pression plus élevée que le déplacement depuis la position de haute pression stable à la position de basse piston stable.

2. Bielle selon la revendication 1, **caractérisée en ce que** la surface de piston (11, 15) sur le piston hydraulique (9) se répartit sur deux surfaces de piston (11, 15) dont la surface de piston radialement interne (11) délimite un premier espace de pression (17) tandis que la surface de piston radialement externe (15) délimite un deuxième espace de pression (18), les deux espaces de pression (17, 18) étant séparés l'un de l'autre par un interstice d'étanchéité (19) situé entre eux.

3. Bielle selon la revendication 2, **caractérisée en ce que** l'interstice d'étanchéité (19) est formé entre une paroi interne d'alésage (81) d'un boîtier (44) et une surface d'enveloppe de guidage (70), laquelle est disposée par rapport à un axe longitudinal de soupape (77) axialement entre la surface de piston radialement interne (11) et la surface de piston radialement externe (15).

4. Bielle selon l'une quelconque des revendications 2 à 3, **caractérisée en ce que** le deuxième espace de pression (18) peut réaspirer du fluide hydraulique par le biais d'un passage (fraisage 69) séparé du premier espace de pression (17) lorsque le piston hydraulique (9) se trouve entre la position de basse pression et la position de haute pression.

5. Bielle selon la revendication 4, **caractérisée en ce que** le passage (fraisage 69) est bloqué et le premier espace de pression (17) et le deuxième espace de pression (18) sont connectés l'un à l'autre lorsque le piston hydraulique (9), dans la position de haute pression, vient s'appliquer contre une butée (16) du boîtier (44).

6. Bielle selon l'une quelconque des revendications précédentes, **caractérisée en ce que** les deux chambres de déplacement (4, 6) sont connectées par le biais de clapets antiretour (40, 41) au raccord d'alimentation (P) de telle sorte que le fluide hydraulique puisse être réaspiré par le raccord d'alimentation (P) et/ou par un canal (37) provenant d'une pompe à huile (76).

7. Bielle selon l'une quelconque des revendications précédentes, **caractérisée en ce que** le piston hydraulique (9) présente une surface de piston (80) de plus petite superficie située en regard de la surface de piston (11, 15).

8. Bielle selon l'une quelconque des revendications précédentes, **caractérisée en ce que** le piston hydraulique (9) présente une position avec une région de transition instable dans laquelle, entre une surface d'enveloppe de guidage (84) du piston hydraulique (9) et un boîtier (44), est formé un interstice d'étanchéité (83) qui ferme un premier alésage (74) conduisant à la première chambre de déplacement hydraulique (4), de sorte que le flux allant de la chambre de déplacement (4) au raccord d'alimentation (P) soit bloqué, un deuxième alésage (75) conduisant à l'autre chambre de déplacement hydraulique (6) étant également bloqué, de sorte que la pression d'alimentation (P) puisse déplacer le piston hydraulique (9) sans qu'un échange fluidique depuis et vers les chambres de déplacement (4, 6) puisse avoir une influence sur le déplacement.

9. Bielle selon la revendication 8, **caractérisée en ce qu'**une nervure annulaire (89) s'étendant radialement vers l'extérieur depuis une base de rainure (20) de la rainure annulaire extérieure (73) est réalisée sous forme d'étranglement entre le premier alésage (74) et le raccord d'alimentation (P), qui perd sa fonction d'étranglement avec le recouvrement de l'alésage (74) .
